Europäisches Patentamt

European Patent Office

Office européen des brevets

(11) Publication number: 0 344 993
A2

# EUROPEAN PATENT APPLICATION

(21) Application number: 89305383.5

(51) Int. Cl.⁴: A01G 9/02

(22) Date of filing: 26.05.89

(30) Priority: 27.05.88 GB 8812625
09.11.88 GB 8826236

(43) Date of publication of application:
06.12.89 Bulletin 89/49

(84) Designated Contracting States:
AT BE CH DE ES FR GR IT LI LU NL SE

(71) Applicant: PLANT PROMOTIONS LIMITED
Kiltearn House Hospital Street
Nantwich Cheshire CW5 5RL(GB)

(72) Inventor: Pearson, Terence Colwyn
Kiltearn House, Hospital Street
Nantwich, Cheshire CW5 5RL(GB)
Inventor: Bertram, Richard Christiaan
33 Wythemede
Binfield, Bracknell, Berkshire(GB)

(74) Representative: Bayliss, Geoffrey Cyril et al
BOULT, WADE & TENNANT 27 Furnival Street
London EC4A 1PQ(GB)

(54) Containers for plant display systems.

(57) The invention concerns a plant display system in which a plurality of inner containers stand within the outer container on platform means. The outer container (60;100) is provided with internal platform means (70;101) having locating means (74;109) for engagement by a respective inner container (10,12;102), the locating means restraining movement of said inner container relative to the outer container in a radial direction with respect to the centre of the outer container. The outer container is also provided in combination with a plurality of inner containers adapted to stand side by side on the platform means within the outer container and in engagement with the associated locating means.

FIG. 6.

# CONTAINERS FOR PLANT DISPLAY SYSTEMS

The invention relates to containers for plant display systems comprising a number of containers for plants. The term "plants" includes bulbs, bushes, trees, herbaceous perennials, bedding plants, house plants, herbs, soft fruit, cacti and succulents.

In the field of plant display devices, it is often desirable to provide a plant display which can be readily varied, either by altering the positions of plants within the display, or by replacing plants by new plants or different plants.

Hitherto, whilst various plant display systems have been proposed, previous plant display devices have necessitated planting the plants within the device, and replanting the plants when it is required to alter the display.

According to the invention there is provided an outer container for a plant display system in which a plurality of inner containers stand within the outer container on platform means, wherein the outer container is provided with internal platform means having locating means for engagement by a respective inner container, the locating means restraining movement of said inner container relative to the outer container in a radial direction with respect to the centre of the outer container.

In one embodiment of the invention the platform means are integral with the outer container.

In another embodiment of the invention the platform means is a separately constructed platform supported above the base of the outer container. The platform may have feet supporting and spacing the platform above the base of the outer container. Alternatively, the periphery of the platform may be supported by at least one projection extending inwardly from the peripheral wall of the outer container adjacent the base of the container.

Preferably the platform has apertures enabling the space beneath the platform to act as a water reservoir both for the collection of excess water and as a supply from which water may pass upwardly into at least one of the inner containers.

The platform means preferably serves as a support for capillary matting extending beneath the inner containers.

The capillary matting may have a portion extending downwardly into an indentation in the platform means or space beneath the platform which portion, in use, acts as a wick to contact liquid at a level below the upper surface of the platform means.

The invention also provides the outer container as defined above in combination with a plurality of inner containers adapted to stand side by side on the platform means within the outer container and in engagement with the associated locating means.

Preferably the inner containers, when disposed side by side, form a semicircle or a continuous ring of inner containers within the outer container which has an interior of corresponding semicircular or circular shape respectively.

It is also preferred that the locating means for each inner container is a projection upstanding from the platform means, the respective inner container being disposed between said projection and the inner surface of the peripheral wall of the outer container. Preferably each inner container is restrained from said radial movement both inwardly and outwardly by its disposition between said locating means and the internal wall surface of the outer container. In a particular arrangement an upper region of the radially outermost wall of the inner container is in contact with the internal wall surface of the outer container and a lower region of the inner container is in engagement with said platform locating means.

Within the semicircle or ring of inner containers there is preferably disposed an additional centre container. The locating means for the centre container may be a projection upstanding from the platform means for engagement in a corresponding recess in the base of the centre container.

Preferably the centre container, at least when disposed within the surrounding inner containers, is taller than said inner containers.

Each inner container preferably has a finger recess in a peripheral wall to assist removal of the inner container from the outer container.

In a preferred embodiment, each inner container has a base and a pair of side walls, which side walls are at a nominal angle of 60° or 30° to each other and, in use, lie radially with respect to the centre of the outer container. Alternatively, the angle between the side walls may be nominally any division of 360°, e.g. 45° or 90°.

Preferably each inner container has its side walls joined at one end by an outer peripheral wall and by an inner peripheral wall at the other end.

It is also preferred that the outer container has a circular or semicircular internal peripheral surface, and the outer and inner peripheral walls of each inner container are concentric therewith.

Preferably each inner container and the central container, if provided, is formed of plastics material.

The outer container is preferably formed of plastics material, terracotta, reinforced glass fibre, concrete, stone or ceramics.

In one embodiment of the invention the outer container is a hanging basket.

There may be provided a combined funnel and level indicator adapted to be disposed in a gap between two adjacent inner containers for assisting the filling of the outer container with liquid and indicating the level of liquid therein.

By way of example, there follows a description of specific embodiments in accordance with the invention, with reference being made to the accompanying drawings, in which:

Figure 1 is a side elevational view of three hollow containers for plants;

Figure 2 is a plan view of the containers of Figure 1 showing the same arrangement;

Figure 3 is a perspective view from below and of one side of the containers of Figures 1 and 2;

Figure 4 is a vertically sectioned view of a circular outer container to receive a plurality of inner containers for plants;

Figure 5 is a vertically sectioned view of a separate support platform to support the inner containers;

Figure 6 is a vertically sectioned view of the outer container of Figure 4 having a number of inner containers as shown in Figure 1 arranged therein and resting on the support platform of Figure 5.

Figure 7 is an enlargement of part of Figure 6 showing details of the support arrangements for the inner containers and capillary matting used to water and feed the plants;

Figure 7a is a similar view to Figure 7, showing a different arrangement of the capillary matting;

Figure 7B is similar to Figures 7 and 7a, but employing a wick to assist the action of the capillary matting;

Figure 8 is a perspective underneath view of a combined funnel and level indicator for filling the outer container;

Figure 9 is a vertically sectioned view of the funnel and level indicator of Figure 8 disposed, in use, between two adjacent inner containers;

Figure 10 is a plan view of an alternative embodiment of the invention, employing a semi-circular outer container;

Figure 11 is a perspective view of another form of inner container;

Figure 12 is a plan view of an alternative circular outer container;

Figure 13 is a section along the line 13-13 in Figure 12;

Figure 14 is a plan view of a further embodiment, in the form of a hanging basket having a separate support platform; and

Figure 15 is a section along the line 15-15 in Figure 14.

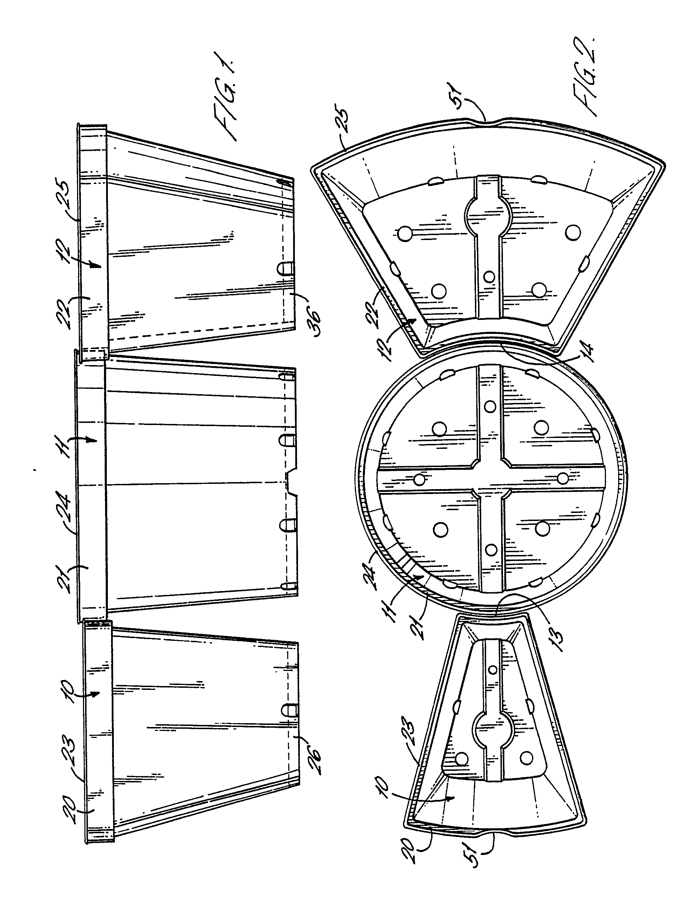

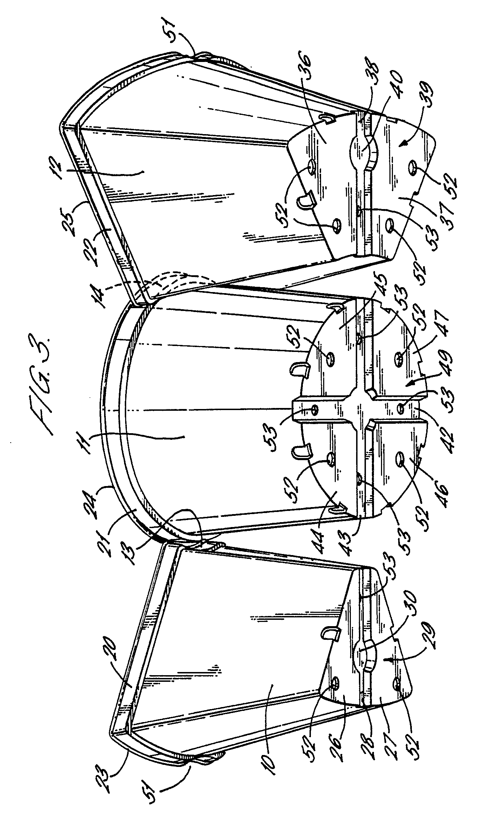

Referring firstly to Figures 1 and 2, there are shown three plant containers 10, 11 and 12, each comprising a receptacle having a base. The middle container 11 is circular in cross-section whilst the other containers 10 and 12 have cross-sections each resembling a segment of an annulus. The containers in this embodiment are vacuum formed or injection moulded from a lightweight plastics material, but various other methods of construction may be employed if desired.

Each container 10, 11, 12 tapers towards the respective base thereof. This feature permits accommodation of the containers in an outer container in a manner to be described below.

It will also be clear from Figure 1 that the middle container 11 is slightly taller than each other container 10 or container 12; and that each container 10, 11, 12 has a respective peripheral top flange 20, 21, 22. Each such top flange 20, 21, 22 has a respective peripheral beading 23, 24, 25.

In the region of the top flanges 20, 21, 22 the respective concave walls 13, 14 of top flanges 20 and 22 are dimensioned to co-operate with the outer surface of top flange 21.

As shown in Figures 1 and 2, the two containers 10 and 12 are arranged about the circular container 11. If a sufficient number of such containers 10, 12 is arranged about container 11, a complete ring of containers 10, 12 may be created about the centre container 11.

From Figure 2 it will be clear that the two containers 10 and 12 are of different capacities, container 10 representing an angular divergence in a horizontal plane of the side walls thereof of approximately 30°, and container 12 representing a corresponding nominal angular divergence of 60°. Other sizes of container, such as nominal 45° and 90° sizes, are possible, but the use of nominal 30° and 60° or, alternatively, nominally 45° and 90° angular wall divergences provides a series of convenient combinations when building up a complete ring of hollow containers. The angular divergences are in fact slightly undersized compared with their nominal sizes so that the containers are a loose fit when inserted in an outer container as described below.

A further feature of the hollow containers 10 and 12 illustrated in Figure 2 is the presence of a recess 51 in the outermost face of each top flange, this serving to permit insertion of a finger to pull the hollow containers clear of an outer container.

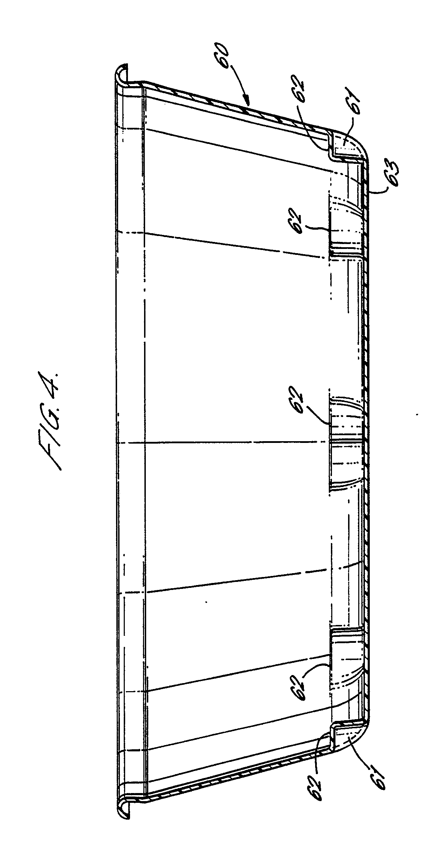

Referring now to Figure 3, there is shown a perspective view of the undersides of the three plant containers of Figures 1 and 2. The underside 29 of container 10 is divided into a pair of lands, 26, 27, separated by a horizontal groove 28 extending longitudinally along base 29. Groove 28 incorporates a circular riser 30 which acts as a reservoir for the plastics material during forming of the container 10.

The underside 39 of container 12 is similarly divided by a groove 38 and riser 40 into a pair of lands 36, 37, whilst the underside 49 of circular container 11 is divided into four lands 44, 45, 46 and 47 by a pair of mutually perpendicular grooves 42, 43 and a central riser 50.

Figures 2 and 3 show a number of through-going apertures formed in the bases of containers 10, 11 and 12. The apertures respectively interconnect the interiors and exteriors of the containers, and those apertures 52 which are formed in lands such as 26, 27 act as liquid supply apertures, whilst those apertures 53 formed in the grooves such as 28, being raised above the level of adjacent lands, act as liquid drainage apertures.

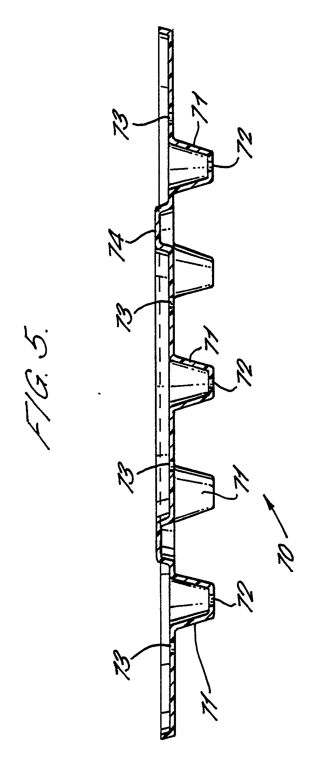

Referring now to Figure 4, there is shown a vertical section through a circular outer container 60 to receive inner containers such as 10, 11 and 12 in a manner to be described in greater detail below.

Outer container 60 may be manufactured from one of a number of materials, for instance teracotta, plastics, stone, fibre reinforced plastics, concrete or ceramics, and may have a decorative pattern applied to the external surface thereof. The diameter of outer container 60 decreases towards the base 63 thereof in the embodiment shown. However, a great variety of shapes of outer container 60 is possible.

A series of indentations 61 distributed about the exterior of the outer container 60 adjacent its base 63 causes the internal surface of the container to protrude inwardly, thereby forming a corresponding number of upwardly-facing shoulders 62 lying parallel to the base 63 of the outer container 60, and distributed about a circumference of the interior of the container which is raised above the level of the base 63. Alternatively, internal ribs or webs may be provided.

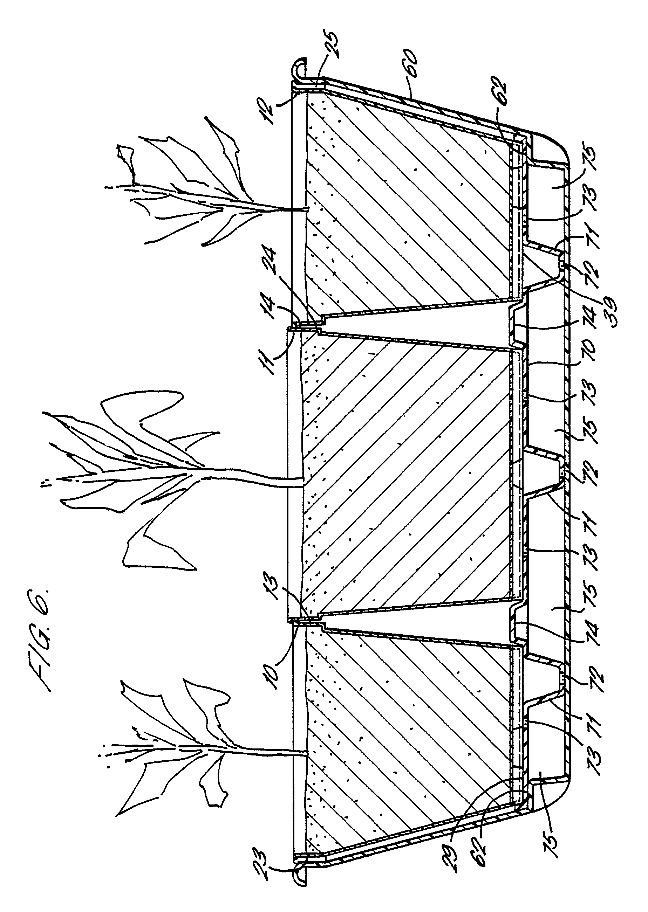

A separately constructed support platform 70, shown in vertical section in Figure 5, may be placed in the bottom of outer container 60 supported at its peripheral edge on the shoulders 62 or ribs or webs, if included, the platform having a plurality of feet or pillars 71 which project downwardly and rest on the base 63 of the outer container 60. The platform is thereby supported and spaced above the base of the outer container 60.

Support platform 70 is generally circular in plan view, and is of sufficient diameter to occupy the cross-section of outer container 60 or, where appropriate, locate on the webs, ribs or platforms of the outer container, at the height at which it is to be supported in the container.

Support platform 70 has a raised, circular rib 74 which is concentric with the platform 70. Rib 74 is formed as a circular indentation on the underside of platform 70 to protrude on the upper surface of platform 70, to form a means of locating the central container 11. The containers 10, 12 are located by the inner rib 74 and top flanges 20, 22.

The feet 71 of platform 70 are similarly formed as downward indentations in the upper surface of the platform, and consequently are hollow.

Each foot 71 has a through-going aperture 72 formed therein to interconnect the regions of outer container 60 above and below platform 70, when the platform is inserted therein. Similar through-going apertures 73 are formed at various points about the flat surface of support platform 70. Radial ribs or channels may also be used as a means of strengthening the platform 70 and providing additional rigidity to support the containers 10, 11, 12.

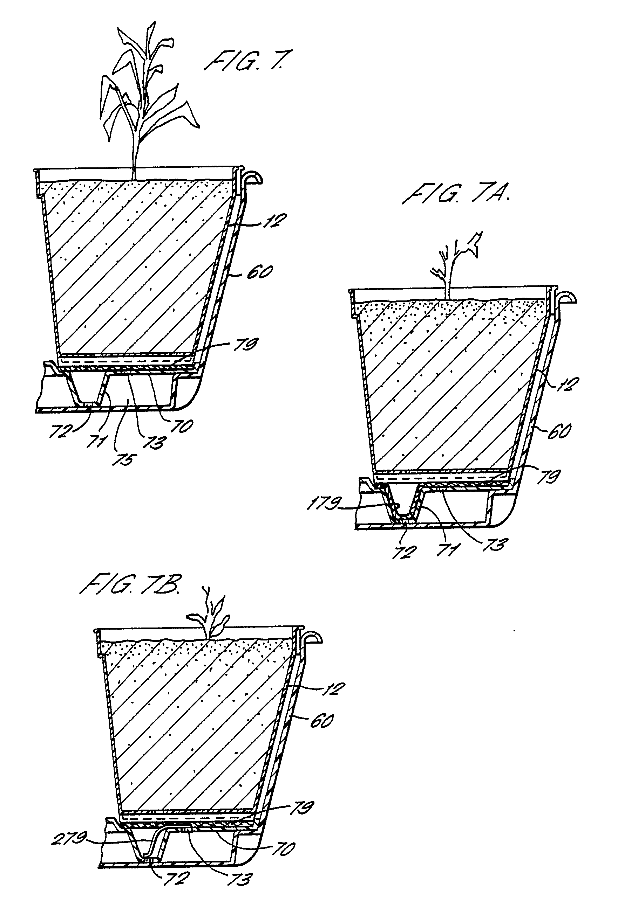

Figure 6 is a vertical sectional view showing the various elements of the invention hereinabove described assembled to form a plant display.

Outer container 60 has inserted therein the support platform 70, which rests adjacent the base of the container 60 on the feet 71 and shoulders 62, thereby creating a basal cavity 75 which communicates with the remainder of the interior of container 60 via apertures 72 and 73.

Located centrally on support platform 70 is the circular container for plants 11, which contains a display of plants growing in a soil medium filling the container. Arranged in a ring about container 11 is a number of containers for plants such as 10 and 12 of Figure 1, each filled with a soil medium supporting a display of plants. In normal use the outer container 60 is filled with such containers 10, 12 arranged about circular container 11.

The annular arrangement of containers 10, 12 may comprise any desired combination of the sizes of container referred to above.

The concave portions 13, 14 of the top flanges 23, 25 of the respective containers 10, 12 communicate with the top flange 24 of central, circular container 11 to assist in retaining the various containers in place. Further restraint is provided by the wall of outer container 60, by the outer flange of platform 70 and by circular rib 74 which is positioned at a suitable radial distance from the centre of support platform 70 to lie adjacent the concave edges of the respective bases 29, 39 of containers 10 and 12, thereby preventing radial inward sliding of the containers on platform 70.

In use, the various containers are planted prior to use with differing plant displays and when a particular display of plants is required, appropriately planted containers are selected and arranged on the support platform 70 within the outer container 60. The device therefore functions as a plant display which can be rapidly prepared, without requiring the actual planting and nurturing of the plants.

When it is desired to alter the plant display, either the containers such as 10, 12 can be moved relative to one another within the outer container 60, or any of the containers 10, 11, 12 can be replaced entirely by containers bearing different plant displays.

These alterations are facilitated by the lightness of the containers, and the fact that each hollow container is only retained within the outer container 60 under gravity.

Manual insertion and removal of the central container 11 is assisted by the fact that it is slightly taller than the surrounding containers 10, 12, and hence protrudes above them.

The tapering of the central container 11 towards the base thereof also facilitates insertion and removal of the container.

Similarly, insertion and removal of the containers 10, 12 into and out of the outer container 60 is assisted by the presence of the indentations 51 shown in Figure 2, which permit insertion of a finger to grip the underside of top flange 23 or 25 and pull the container 10, 12 clear of the outer container 60, or to permit lowering of the hollow container 10, 12 into place as appropriate.

The tapering towards the base of containers 10, 12 permits tilting of them in relation to outer container 60 during insertion or removal to avoid the top flange 23, 25 of the hollow containers 10, 12 colliding with the top flange 24 of the central container 11.

Watering and feeding of a full display of plants occupying an outer container 60 is accomplished in a conventional manner, by pouring water and/or plant food solution directly into the containers, but the arrangement of the invention permits equalising of water levels from container to container in the event that some of the hollow containers receive more water or nutrient solution than others.

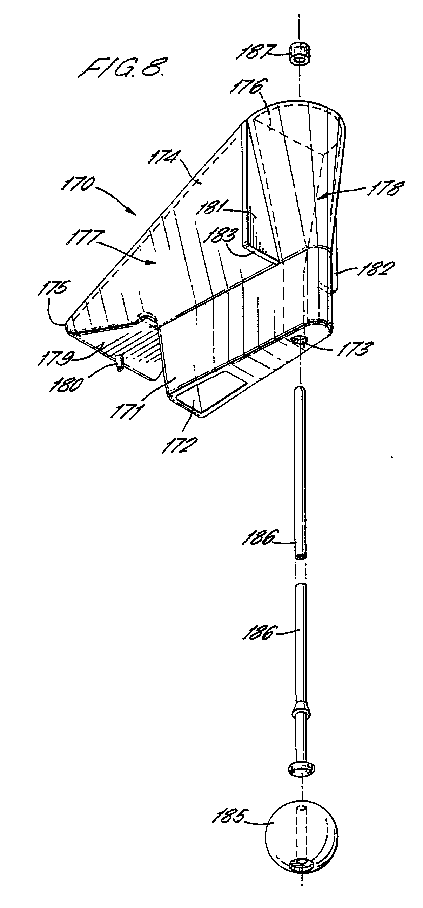

This feature is best illustrated in Figure 6, and additionally Figure 7, which is an enlargement of a portion of Figure 6 showing the arrangement of apertures.

For example, if during watering, one or more containers such as 12 receive an adequate quantity of water or plant food solution whilst an adjacent container receives insufficient water to supply the plants growing therein, some water or solution will drain from container 12 via the liquid drain apertures 52, and, if the level of liquid in the bottom of outer container 60 is low, via the supply apertures 53.

This drained water will pass on to support platform 70 and pass through the apertures in the feet 71 and surface thereof adjacent hollow container 12 to collect in the basal cavity 75 of outer container 60 and platform 70.

When the level of water or plant food solution collecting in the basal cavity 75 reaches the level of the surface of support platform 70 the liquid is then able to pass, via capillary action, through the apertures in the surface of support platform 70 and the liquid supply apertures 52 formed in the lands of container 11, to the interior thereof to supply the plants growing in container 11 with water and/or materials.

The containers of the invention may therefore be self-regulating to a limited extent as regards the distribution of water/plant food solution from container to container.

However, the method of self-regulation of the liquid distribution described in the preceding paragraphs relies on the existence of a considerable excess of liquid being applied to one or more containers for plants 10, 11, 12 for there to be sufficient liquid to rise to the surface of the support platform 70 to supply any container which is suffering a shortfall of water/plant food solution.

One optional solution to this disadvantage is the inclusion of capillary matting 79, which lies on the surface of support platform 70 and interconnects the lands of the various containers 10, 11, 12. Thereby, if any excess water/plant food solution is applied to one or more containers, the excess will pass via liquid drainage apertures 53 on to the surface of capillary matting 79. It will then pass via capillary action in the matting across the surface of support platform 70 to a region thereof where there is a shortage of liquid, such areas generally coinciding with the lands of containers which have not been adequately watered. The excess liquid may then supply the dry container under capillary action through the liquid supply apertures 52 to water or feed the plants as appropriate. Conventional capillary matting may be employed.

Referring now to Figure 7A, there is shown a similar view to that of Figure 7, but which differs in that the capillary matting 79 is formed with downwardly extending indentations 179 which are shaped to mate with the indentations in platform 70 which form the feet 71 thereof. The effect of this modification is to reduce the level to which water or plant food solution in basal cavity 75 needs to rise, via apertures 72 and inside the hollow indentations forming feet 71, to contact the material of the capillary matting and hence supply the plants etc. contained in the display with water or food. A lower overall level of water/plant food solution is therefore required in outer container 60.

An alternative to the use of indentations of capillary matting 179 is shown in Figure 7B, wherein a wick 279 is shown extending into the hollow indentation of foot 71. Wick 279 serves the same function as capillary matting 79, and may either be bonded to capillary matting 79 or may simply have an upper end lying between capillary matting 79 and platform 70 and retained by the weight of the capillary matting and container 12 as shown.

A further method of supplying the inner containers with food and/or water is simply to pour a quantity of the appropriate solution into the outer container, either having previously removed the inner containers or by pouring about the inner containers while they are in place, until the level of liquid reaches the upper surface of support platform and may then feed and/or water the inner containers by capillary action as described above.

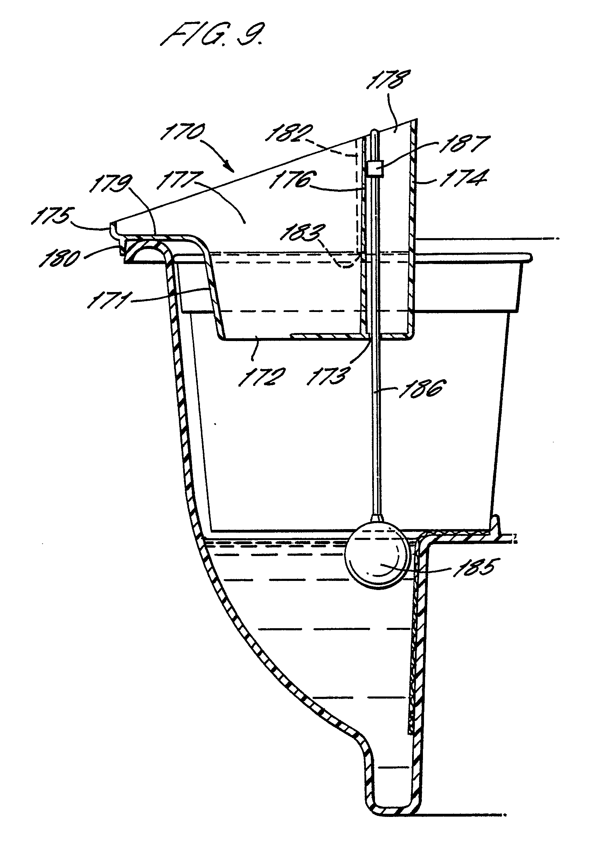

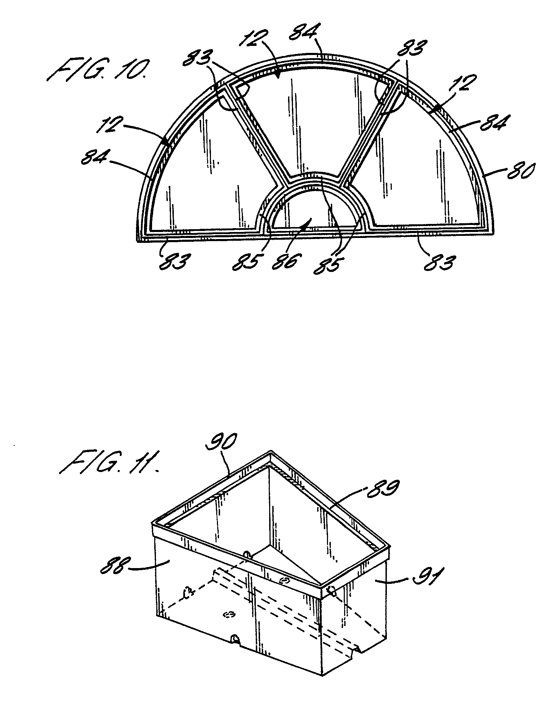

Figures 8 and 9 show a combined funnel and level indicator 170 which may optionally be used to fill the outer container while the inner containers are in place.

The funnel and level indicator 170 has a lower, elongate, tapered trough 171 having two apertures 172, 173 in the base thereof. Trough 171 is integrally formed with upper funnel wall 174 which is continuous about the upper region of funnel and level indicator 170 and has mutually diverging walls to form a funnel shape which readily receives, for example, the spout of a watering can. The height to which funnel wall 174 extends above trough 171 decreases towards the rear 175 of the funnel and level indicator.

At its forward end, funnel and level indicator 170 has a rounded profile. An upstanding dividing wall 176 separates the portion of funnel and level indicator containing the rounded profile from the remainder thereof, so that the article is divided into two compartments 177 and 178.

Forward compartment 178 includes basal aperture 173 and rear compartment 177 includes basal aperture 172.

At the rearmost end of funnel and level indicator 170, the upper edge of funnel wall 174 flattens to form ledge 179 on the lower face of which is formed locating lug 180. Lug 180 is disposed approximately half way along ledge 179.

Towards the forward end of the funnel and level indicator are disposed support flanges 181 and 182 which are formed in a common plane with dividing wall 176 but which extend respectively on opposite sides of the funnel and level indicator 170 and on the exterior surface thereof. Each support flange has a lower, horizontal support edge 183.

In use, the funnel and level indicator 170 is inserted in the gap between two adjacent arcuate inner containers, with the ledge 179 resting on the beading of the outer container, and the lug 180 lying against the outer surface of the beading. The support edges 183 of the support flanges 181 and 182 respectively rest on the beading of the adjacent inner containers.

The outer container may then be filled with liquid via rear compartment 177 and basal aperture 172 acting as a funnel. Forward compartment 178 indicates the level of liquid in the outer container. A float 185 is mounted beneath compartment 178 on a guide stick 186 which rises upwardly through basal aperture 173 with increasing fluid level so that stick 186 indicates within compartment 178 the level of water/plant food solution. A sleeve 187 e.g. of coloured rubber, facilitates inspection of the height of the guide stick 186 and float 185, and hence the level in the water container.

In order to accommodate the tapered trough of funnel and level indicator 170, each inner container arranged in an annular pattern in the outer container, whilst being of, say, a nominal 60° divergence angle, is in fact of a slightly smaller divergence angle such as 58°30'. This slight undersizing of each inner container creates a sufficient gap between two of the inner containers for the tapered trough 171 to be positioned therebetween, even when the annular arrangement of inner containers is fully occupied. The funnel and level indicator will thereby extend radially of the outer container and be supported on the outer container and the adjacent inner containers (Figure 9). After completing the filling operation the funnel and level indicator may be removed, if desired.

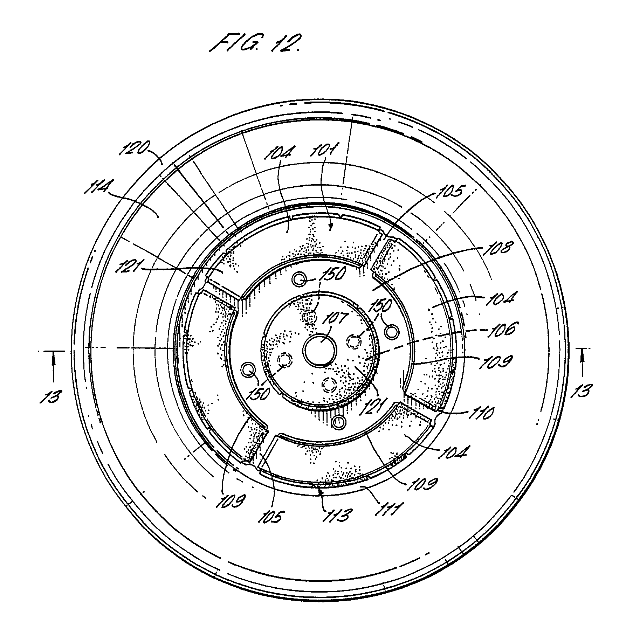

Figure 10 shows another embodiment of the invention in which the outer container 80 has an internal semicircular shape. Within the outer container 80 is a platform (not shown) which is likewise semicircular and three inner containers standing on the platform. Each inner container 12 has a pair of side walls 83 at an angle of nominally 60° to one another, an outer peripheral wall 84 between the side walls which is convex relative to the interior of the receptacle, and an inner peripheral wall 85 between the side walls which is concave relative to the interior of the receptacle. The inner peripheral walls 85 of the three containers 82 thus form an approximately semicircular space which is filled by a central, semicircular container 86. The container 86 corresponds to the circular, central container 11 of the first embodiment.

As previously indicated, the plant display described herein has a number of advantages over other plant display devices.

The plants used to form a display in the containers of the invention can be planted in the containers 10, 11, 12 prior to purchase. The purchaser then only needs to insert the containers into the outer containers 60 in a desired configuration to create a plant display.

Watering and feeding of the plants is convenient and does not require a great degree of accuracy in supplying water/food solution.

If the plant display needs to be changed, either for aesthetic reasons or because a plant has died, this can simply be accomplished by withdrawing a container or containers 10, 11, 12 and replacing them as required.

Further, the raised support platform 70 acting in combination with the liquid drain apertures 53 tends to prevent the situation of plants which have been over-watered standing for lengthy periods in a large amount of water and eventually rotting. Additional means of drainage, for example suitable apertures, may be included in outer container 60 above the level of platform 70 to prevent the water level in container 60 from rising above the level of the drainage apertures 53 formed in the containers such as 10, 11 and 12.

In addition, it has been found that more successful cultivation of plants can be achieved using the apparatus of the invention due to the advantage of plant type homogeneity within each inner container. Each inner container may be arranged to contain either a single plant or a plurality of plants of the same type. In each case, the plants may be easily cultivated, matured and maintained in a healthy condition since there are no rival plants of another type to crowd the roots and/or leaves of the plant type in the container. In particular, the roots of the plant type in the container are not choked by the roots of rival plants; and scavenging of nutrients form the growing medium by rival plants is eliminated. The spread of plant diseases may also be checked using the apparatus of the invention since it is readily possible to isolate inner containers containing diseased plants from the remainder of the display.

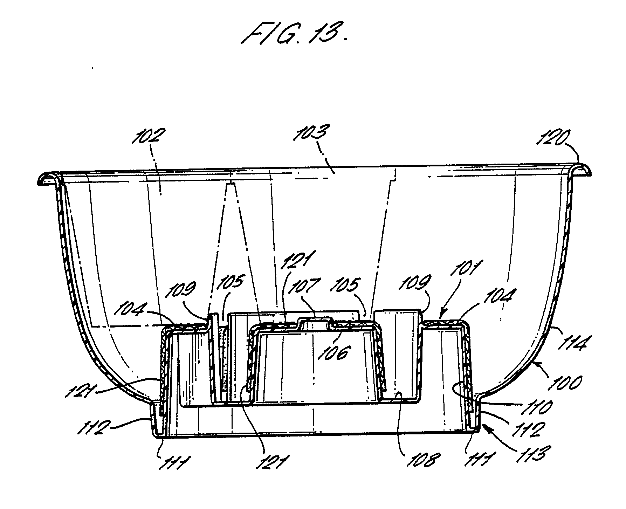

With reference to the above described embodiments each of the inner containers 10, 12 has a pair of side walls joined by curved outer and inner peripheral side walls which are concentric with the internal surface of the outer container. Figure 11 illustrates an alternative inner container 87 having side walls 88, 89 which are at an angle of approximately 60° to one another and further straight outer and inner peripheral side walls 90, 91 extending between the side walls 88, 89. Such a container 87 may be used as an inner container for an outer container (not shown) having an interior with a number of equal sides corresponding to the outer peripheral side wall of the container 87, eg. it may have a hexagonal or octagonal interior. Similarly, such a plant display system would employ a hexagonal or octagonal central container. Alternatively, if the inner peripheral side wall of each inner container is concave relative to the interior of the inner container, there may be employed a circular, central container 11 as before.

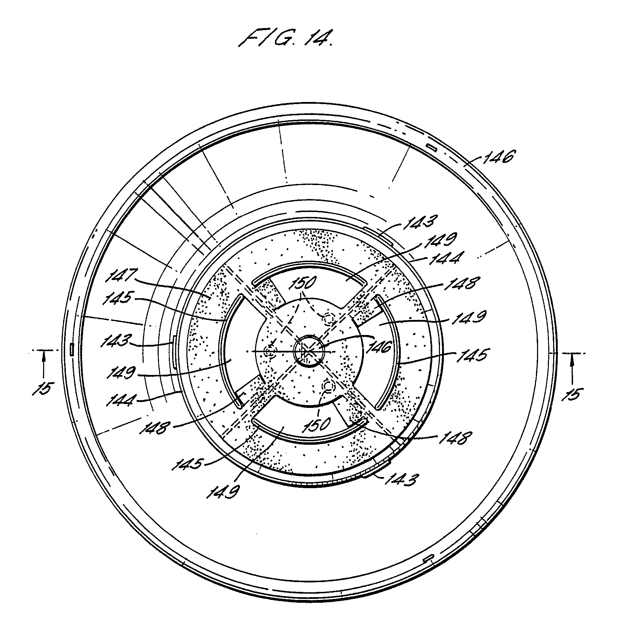

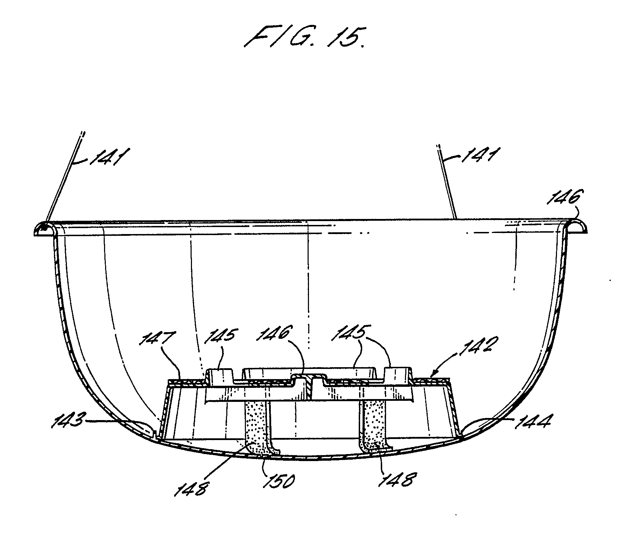

Turning now to Figures 12 and 13, there is shown a further embodiment of the invention in the form of an outer container 100 which is circular in plan view. Outer container 100 has formed integrally therewith an internal support platform 101 which serves to support the inner containers, of which one, 102, is shown in outline in Figure 13. A central, circular inner container 103 is also shown in Figure 13.

Support platform 101 comprises four arcuate outer lands 104 spaced about a pitch circle concentric with the plan of the outer container, and separated from one another in the angular direction by four corresponding radial notches 105.

Support platform 101 also comprises a central, land 106 spaced inwardly from the circle of arcuate lands 104 by an annular trough 108 passing circumferentially about central land 106.

The radially innermost edge of each arcuate land 104 has an arcuate, upstanding abutment wall 109 formed along the length thereof, with each such wall 109 terminating at the adjoining notches 105.

The radially outermost edge of each arcuate land is bounded by a generally downwardly extending side wall 110 which extends to below the level of the notches 105 and is therefore continuous about a circle enclosing in plan view the four arcuate lands in a lower part of its depth. In this region, the side wall 110 forms, in self conjunction with an annular base 111 extending perpendicular thereto and a further, generally vertical annular side wall 112 extending upwardly of base 111 and radially spaced from side wall 110, a combined fluid reservoir and support ring 113 for the outer container 100.

The generally vertical, annular wall 112 intersects the dome-shaped wall 114 of the outer container and wall 114 terminates at its upper, outermost edge in a continuous beading 120 formed as a semi-circle revolved along the outermost periphery of outer container 100.

In use, the integrally formed support platform 101 of Figures 12 and 13 may support a central, circular, inner container 103 on the central, circular land 106, with the raised button 107 locating in a corresponding recess formed in the base of the container 103 to restrain lateral movement thereof.

The containers such as 102 which are arranged in an annular pattern on support 101 are each supported vertically by a portion of an arcuate land 104. The containers 102 are restrained from moving radially within the outer container by virtue of the lowermost, radially innermost corner of each container 102 abutting against a portion of the abutment wall 109 and the uppermost, radially outermost corner of each container 102 resting against a portion of the inner face of the beading 120.

The annular trough 108 and annular reservoir and support ring 113 may, in use, be filled with a plant food solution, such as water and nutrients, or simply water. If a sufficient quantity of such liquid is added to the outer container 100, the level thereof will rise above the base of each notch 105 and hence there will be a continuous body of fluid in the trough 108, reservoir 113 and the notches 105.

Suitable capillary matting 121 may be arranged to provide a path for the fluid from the continuous body thereof to the lands 104, 106, from which it may pass through supply holes formed in the bases of the inner containers 102, 103 to feed and water the plants growing therein.

The capillary matting 121 shown in Figures 12 and 13 is shaped to conform to the support platform 101. Thus a generally circular sheet of capillary matting 121 having a central, circular cut-out to accommodate the raised button 107 lies on land 106, and a number of wicks extends downwardly into trough 108 to receive liquid therefrom. A further, generally annular sheet of capillary matting 121 lies on the lands 104 with wicks extending downwardly both into trough 108 and reservoir 113.

As indicated above, reservoir 113 has the additional function of supporting the outer container 100 when annular base 111 is in contact with a flat, horizontal surface, such as a table top, pedestal or the like. The outer surface of upstanding wall 112 may be formed with an attractive finish to enhance the appearance of the outer container, which may be formed by moulding. The underside of platform 101 is obscured from view when the outer container rests on a flat surface in normal use.

Figures 14 and 15 show yet another embodiment of the invention, in which the outer container 140 is formed as a hanging basket to be supported by hanging cords 141 or chains (not shown). "Hanging Basket" in this context need not be restricted to an article made of basket weave, and may embrace a water tight container to be suspended by a cord.

Since the underside of the exterior of the hanging basket 140 is likely to be visible on viewing of the plant display contained therein, it may be undesirable to construct an internal, integral support platform since the reverse pattern caused by the impression of mould tooling on the exterior of the hanging basket 140 may be visible and unsightly.

Accordingly, the embodiment of Figures 14 and 15 is provided with a separate support platform 142 which is formed generally as a squat frustrum of a circular cone, and which locates against three equi-spaced, upstanding walls 143 formed in the base of the hanging basket 140. The support platform 142 is such that on insertion thereof within the hanging basket 140, the flange 144 formed on the lower, outermost circumference thereof lies within the pitch circle on which the upstanding walls 143 are formed in contact with said walls.

The support platform 142, when inserted into the basket 140, tends to be driven upwards since the resilience of the material thereof, which may be any of a number of materials including a suitable, high-density plastics material, tends to force the platform upwardly of the upstanding walls 143. However, this tendency is conteracted when a display of plants growing in inner containers (not shown) is supported on the platform since their combined weight acts downwardly on the platform 142. The resilience of the material of platform 142 is therefore converted to a force supporting the inner containers, and the structure of the platform 142 is more rigid as a result of this interaction of forces.

The inner containers themselves are restrained against radial movement on the support platform 140 in a similar manner to that in which the inner containers 102 are restrained in the embodiment of Figures 13 and 14. Platform 142 has an arrangement of equi-spaced, arcuate abutment walls 145 against which the radially innermost, lower edge of an inner container such as container 102 of Figures 12 and 13 may abut. The radially outermost, upper walls of the inner containers may abut against peripheral beading 146 of hanging basket 140, the two regions of abutment preventing undesirable radial movement of the inner containers.

The central, circular inner container (not shown) locates on the raised button 146 in a similar manner to that in which the central, inner container of Figures 12 and 13 locates on button 107 of these figures.

The hanging basket 140 has a continuous base wall and therefore is suitable to act as a reservoir for plant feeding/watering liquid. Capillary matting 147 is interposed between platform 142 and the containers (not shown) and is in contact with the liquid lying in the bottom of hanging basket 140 by virtue of portions 148 thereof protruding downwardly of the platform 142 via arcuate apertures 149 formed therein to permit passage of liquid between the liquid reservoir and the upper surface of platform 142. The portions 148 of the capillary matting 147 which are in contact with the liquid are each formed by three interconnected cuts in the matting which conform to the position of a corresponding arcuate aperture 149 and which permit a flap 148 of capillary matting to hinge downwardly through the aperture and into the liquid. Four arcuate apertures 149 are shown equi-spaced on a pitch circle concentric with the support platform 142.

Further, the capillary matting 147 has suitable portions cut out therefrom to accommodate the upstanding abutment walls 143 and the raised, central button 146.

It will be apparent that the hanging basket 140 may act as a liner for a further, outer container, such as a decorative outer container made of wood, terracotta, stone, ceramic materials or basket weave. Such further, outer containers need not be watertight and may be highly porous.

In all of the embodiments described hereinabove, there may be provided in the mouldings forming the outer containers an arrangement of knock-out plugs, such as plugs 150 of Figures 12 to 15 which may optionally be punched out from the containers to provide drainage apertures therefor. However, such plugs will, in general, have to be replaced prior to re-filling of the liquid supply reservoirs.

The knock-out plugs 150 which are provided at a high level, for instance in the central land area of support 101 in Figure 12 in the outer containers act as overflow drainage holes to prevent over-filling of the outer container with liquid. Such knock-out plugs can also be provided at a suitable height in the trough and hanging basket-type outer containers.

If desired a suitable funnel and level indicator such as 170 of Figures 8 and 9 may be used with the embodiments of Figures 10 and 12 to 15 and in the same manner as described in relation to the embodiment of Figures 1 to 7B, i.e. positioned in a gap between two adjacent inner containers.

The invention is not restricted to the details of the specific embodiments described above. For example, in the embodiments shown in Figures 1 to 3, the inner peripheral wall of each inner container may be omitted. The inner containers would then extend to a central point within the outer container, and there would be no central container 11 or 86. The same may apply to the inner container of Figure 11, in which case the side wall 91 would be omitted and the side walls 88, 89 would extend to meet each other.

## Claims ·

1. An outer container for a plant display system in which a plurality of inner containers stand within the outer container on platform means, characterised in that the outer container (60;100) is provided with internal platform means (70;101) having locating means (74;109) for engagement by a respective inner container (10,12;102), the locating means restraining movement of said inner container relative to the outer container in a radial direction with respect to the centre of the outer container.

2. An outer container as claimed in Claim 1, characterised in that the platform means (101) are integral with the outer container.

3. An outer container as claimed in Claim 1, characterised in that the platform means is a separately constructed platform (70) supported above the base of the outer container (60;100).

4. An outer container as claimed in Claim 3, characterised in that the platform (70) has feet (71) supporting and spacing the platform above the base of the outer container (60;100).

5. An outer container as claimed in Claim 3 or Claim 4, characterised in that the periphery of the platform (70) is supported by at least one projection (62) extending inwardly from the peripheral wall of the outer container (60;100) adjacent the base of the container.

6. An outer container as claimed in any one of Claims 3 to 5, characterised in that the platform (70) has apertures (73) enabling the space beneath the platform to act as a water reservoir both for the collection of excess water and as a supply from which water may pass upwardly into at least one of the inner containers (10,12).

7. An outer container as claimed in any one of the preceding claims, characterised in that the platform means (70;101) serves as a support for capillary matting (79;121) lying beneath the inner containers.

8. An outer container as claimed in Claim 7, characterised in that the capillary matting (79;121) has a portion extending downwardly into an indentation in the platform means (70;101) or space beneath the platform which portion, in use, acts as a wick to contact liquid at a level below the upper surface of the platform means.

9. An outer container as claimed in any one of the preceding claims, in combination with a plurality of inner containers (10,12;102) adapted to stand side by side on the platform means (70;101) within the outer container (60;100) and in engagement with the associated locating means (74;109).

10. The combination as claimed in Claim 9, characterised in that the inner containers (10,12;84;102), when disposed side by side, form a semicircle or a continuous ring of inner containers within the outer container (60;80;100) which has an interior of corresponding semicircular or circular shape respectively.

11. The combination as claimed in Claim 10, characterised in that the locating means for each inner container (10,12;102) is a projection (74;109) upstanding from the platform means, the respective inner container being disposed between said projection and the inner surface of the peripheral wall of the outer container (60;100).

12. The combination as claimed in Claim 10, characterised in that each inner container (10,12;102) is restrained from said radial movement both inwardly and outwardly by its disposition between said locating means (74;109) and the internal wall surface of the outer container (60;100).

13. The combination as claimed in Claim 12, characterised in that an upper region of the radially outermost wall of the inner container (10,12;102) is in contact with the internal wall surface of the outer container (60;100) and a lower region of the inner container is in engagement with said platform locating means (74;109).

14. The combination as claimed in any one of Claims 10 to 13, characterised in that within the semicircle or ring of inner containers, there is disposed an additional centre container (11;86;103).

15. The combination as claimed in Claim 14, characterised in that the locating means for the centre container (103) is a projection (107) upstanding from the platform means (101) for engagement in a corresponding recess in the base of the centre container.

16. The combination as claimed in Claim 14 or Claim 15, characterised in that the centre container (11), at least when disposed within the surrounding inner containers (10,12), is taller than said inner containers.

17. The combination as claimed in any one of Claims 9 to 16, characterised in that each inner container (10,12) has a finger recess (51) in a peripheral wall to assist removal of the inner container from the outer container (60).

18. The combination as claimed in any one of Claims 9 to 17, characterised in that each inner container (10,12) has a base and a pair of side walls, which side walls are at a nominal angle of 60° or 30° to each other and, in use, lie radially with respect to the centre of the outer container.

19. The combination as claimed in Claim 18, characterised in that each inner container (10,12) has its side walls joined at one end by an outer peripheral wall and by an inner peripheral wall at the other end.

20. The combination as claimed in Claim 19, characterised in that the outer container (60;80) has a circular or semicircular internal peripheral surface, and the outer and inner peripheral walls of each inner container (10,12;84) are concentric therewith.

21. The combination as claimed in any one of Claims 9 to 20, characterised in that each inner container (10,12) and the central container (11), if provided, is formed of plastics material.

22. An outer container or combination as claimed in any one of the preceding claims, characterised in that the outer container (60) is formed of plastics material, terracotta, reinforced glass fibre, concrete, stone or ceramics.

23. An outer container or combination as claimed in any one of the preceding claims, characterised in that the outer container is a hanging basket (140).

24. The combination as claimed in any one of Claims 9 to 23, characterised in that a combined funnel and level indicator (170) is adapted to be disposed in a gap between two adjacent inner containers for assisting the filling of the outer container with liquid and indicating the level of liquid therein.

FIG.1.

FIG.2.

EP 0 344 993 A2

FIG.3.

FIG.4.

EP 0 344 993 A2

FIG. 5.

EP 0 344 993 A2

FIG. 6.

EP 0 344 993 A2

EP 0 344 993 A2

FIG. 7.

FIG. 7A.

FIG. 7B.

FIG. 8.

FIG. 9.

EP 0 344 993 A2

FIG. 10.

FIG. 11.

FIG. 12.

FIG. 13.

EP 0 344 993 A2

FIG. 14.

FIG. 15.